# DEMANDE DE BREVET EUROPEEN

(11) **EP 3 339 788 A1**
(43) Date de publication de la demande: **27.06.2018**
(21) Numéro de dépôt: 17208515.1
(22) Date de dépôt: 19.12.2017
(51) Int. Cl.: F27D 1/00

(54) **FOURS ET PRODUITS D'ISOLATION POUR FOURS**

(30) Priorité: 21.12.2016 FR 1662958
(71) Demandeur: Saint-Gobain Isover, 92400 Courbevoie (FR)
(72) Inventeur: BAREYT, Christophe, 60340 SAINT-LEU D'ESSERENT (FR); GOGEON, David, 60870 VILLERS ST PAUL (FR)
(74) Mandataire: Saint-Gobain Recherche

(57) **Abrégé**

L'invention concerne un dispositif fonctionnant à haute température, en particulier jusqu'à 550°C, et notamment entre 50 et 350°C, tel qu'un four ou une partie de four, ce dispositif comprenant au moins un produit isolant formé d'au moins deux couches, une première couche, placée vers la zone de chauffe et/ou le(s) élément(s) de chauffe à isoler, formée de laine(s) et/ou fibre(s) minérale(s) et de densité inférieure à 120 kg/m³, et une deuxième couche, plus éloignée, choisie parmi les isolants formés d'aérogel(s) ou de silice amorphe ou les isolants sous vide ou éventuellement tout autre super isolant.

L'invention concerne également le produit isolant approprié pour ce dispositif.

## Description

La présente invention concerne une installation (ou un appareil ou dispositif) susceptible d'opérer à haute température, en particulier à des températures jusqu'à 550°C et notamment comprises entre 50 et 350°C, telle qu'un four de cuisson, en particulier un four destiné à l'usage domestique, ainsi qu'un produit d'isolation thermique adapté à l'isolation de ladite installation ou dudit four, en particulier adapté à l'isolation de caissons de chauffe desdits fours.

Il est connu d'isoler des parties de four, par exemple l'enceinte (ou chambre ou caisson ou moufle) de chauffe (ou cuisson), pour protéger de la chaleur ou de la surchauffe les composants (notamment électroniques) présents autour de l'enceinte ou les parties externes du four ou le cas échéant le mobilier intégrant le four, cette isolation permettant aussi d'éviter les pertes de chaleur à l'extérieur de l'enceinte et d'améliorer les performances énergétiques du four lors de son utilisation. Les isolants utilisés doivent être en mesure de résister aux températures élevées auxquelles ils sont (au moins temporairement) confrontés et de conserver leurs performances (notamment mécaniques, ou d'isolation suffisante) à ces températures sans risque de dégradation ou d'émissions potentiellement dangereuses pour la santé.

Les fours sont le plus souvent isolés avec des isolants fibreux à base de fibres synthétiques telles que la laine de verre ou la laine de roche, en particulier en utilisant des feutres ou mats de laine minérale qui sont installés ou insérés, généralement manuellement, autour de l'enceinte. L'épaisseur et la densité des couches de laines minérales utilisées étant cependant limitées par les capacités des lignes de fabrication existantes, il peut en résulter des zones mal isolées (épaisseur inappropriée pour remplir les espaces ou reliefs changeant des carcasses de four) et des ponts thermiques, la consommation énergétique de ces fours usuels pouvant rester de ce fait relativement importante.

Pour réduire les inconvénients liés à la manipulation directe de la laine minérale (irritation de la peau, poussières), le document WO 93/01444 propose par ailleurs d'effectuer l'isolation d'objets tels que des fours par projection d'un matériau fibreux minéral avec mouillage simultané des fibres par de l'eau et/ou un liant, suivie de la mise en forme de la couche projetée puis du séchage/durcissement de la couche mise en forme. Cependant, cette technique pose des problèmes de nettoyage du poste de travail, les divers traitements opérés étant en outre plus coûteux en temps que celui nécessaire à la pose des isolants traditionnels, et il est difficile de contrôler la quantité de matériau déposée et d'obtenir une densité homogène. Le document WO 2001/036859 propose également un procédé amélioré dans lequel l'isolation est cette fois formée par insufflation de flocons de laine minérale entre la surface à isoler et une enveloppe telle qu'une feuille métallique ou un voile de verre, les flocons étant véhiculés par un courant gazeux pendant qu'on dirige sur eux au moins un jet de liant aqueux (permettant notamment d'éviter l'envol de poussières, de véhiculer et d'appliquer les flocons et de rigidifier ultérieurement la couche une fois sec) pour former une couche délimitée par l'enveloppe, avant séchage pour éliminer l'eau. Ce procédé reste cependant long, pose des problèmes de coalescence des flocons encollés pouvant entrainer une inhomogénéité de densité à certains endroits, la densité de flocons obtenue n'excédant généralement pas en outre 60 kg/m³, limitant ainsi les performances d'isolation obtenues.

La plupart des autres isolants existants dans d'autres applications ne sont quant à eux généralement pas adaptés à l'isolation d'installations soumises à de hautes températures, ces matériaux présentant le cas échéant de meilleures performances thermiques à température ambiante mais pouvant se dégrader ou perdre leurs bonnes performances thermiques à haute température ou dans le temps. C'est le cas par exemple des isolants organiques cellulaires de type polymère expansé ou mousses, ces matériaux se dégradant notamment à haute température. De la même façon, les isolants sous vide, de même que les aérogels, ne sont traditionnellement pas utilisés dans les fours, ces isolants de par leur nature et/ou constitution et/ou composants présentant des risques potentiels de dégradation ou de perte de leurs performances thermiques à haute température et/ou présentant une rigidité ne leur permettant pas de se conformer aux reliefs du four. En outre, les liants, notamment organiques, généralement utilisés dans les isolants pour assurer notamment leur intégrité mécanique peuvent le cas échéant provoquer lors des premiers cycles de fonctionnement du four ou à haute température, par exemple lors de cycles de pyrolyse, des émissions gazeuses indésirables.

L'amélioration des performances énergétiques des fours, en même temps qu'une conception relativement simple et une constitution solide et sûre, avec une bonne conservation des performances dans le temps, restant souhaitées et recherchées par les électroménagistes, ainsi que par les utilisateurs, la présente invention a donc cherché à mettre au point une nouvelle installation (ou appareil ou dispositif), en particulier domestique ou ménagère, fonctionnant à haute température (en particulier comprise entre 50 et 350°C), telle qu'un four de cuisson, et permettant d'obvier à au moins un des inconvénients énoncés ci-avant, en particulier présentant de bonnes performances thermiques et une consommation énergétique améliorée, cette installation étant en outre avantageusement simple de conception, pérenne et d'utilisation sûre dès sa première utilisation.

Ce but a été atteint par le dispositif (ou appareil) selon l'invention, fonctionnant à haute température (supérieure à la température ambiante), en particulier jusqu'à 450°C ou même 550°C, et notamment entre 50 et 350°C, ce dispositif étant en particulier un four ou une partie de four, ce dispositif comprenant (ou étant muni de) au moins un produit isolant (thermiquement), ledit produit étant formé d'au moins deux couches, une première couche, placée (ou tournée) vers (ou du côté de ou le plus prêt de ou la plus proche de (comparativement par rapport à la deuxième couche)) la zone de chauffe (ou de cuisson, plus particulièrement l'espace ou caisson interne à isoler, c'est-à-dire, pour un four, le moufle ou l'enceinte (interne) de chauffe/cuisson dans lequel/laquelle sont placés les éléments à chauffer/cuire) et/ou le ou les éléments de chauffe (par exemple une ou des résistances) du dispositif à isoler, ladite première couche étant formée de laine(s) et/ou fibre(s) minérale(s) et étant de densité inférieure à 120 kg/m³, et une deuxième couche, plus éloignée ((que la première) de ladite zone de chauffe et/ou du ou desdits éléments de chauffe, ou encore tournée à l'opposé de la première (en particulier vers l'extérieur du dispositif)), ladite deuxième couche étant choisie parmi les (super-) isolants formés (au moins en partie) d'aérogel(s) ou de silice amorphe (notamment pyrogénée ou précipitée) ou les isolants sous vide ou éventuellement tout autre super isolant.

Par super-isolant, on entend un isolant présentant une conductivité thermique inférieure à 22 mW/m.K à la température de 10°C (la conductivité thermique étant mesurée en particulier selon la norme EN12667). Les isolants formés (au moins en partie) d'aérogel(s) ou de silice amorphe (en particulier pyrogénée, ou éventuellement précipitée) ou les isolants sous vide sont des exemples préférés selon l'invention d'isolants, de type super-isolants, utilisés pour former la deuxième couche précitée.

La présente invention concerne également le produit d'isolation thermique (ou isolant ou produit isolant) adapté à l'isolation du dispositif (utilisable à) haute température précité. Ce produit isolant, en particulier adapté (ou destiné) à l'isolation de fours (notamment à usage domestique), est un produit formé d'au moins deux couches, une première couche, destinée à être placée vers (ou la plus près de, comparativement à la deuxième couche) la zone de chauffe et/ou le ou les éléments de chauffe (du dispositif) à isoler, formée de laine(s) et/ou fibre(s) minérale(s) et de densité inférieure à 120 kg/m³, et une deuxième couche, plus éloignée, choisie parmi les isolants formés d'aérogel(s) ou de silice amorphe ou les isolants sous vide ou éventuellement tout autre super-isolant.

Les qualificatifs "première" et "deuxième" sont dans le présent texte utilisés simplement aux fins de distinguer les deux couches mais n'impliquent pas nécessairement un positionnement consécutif de ces couches, une ou des couches supplémentaires, en particulier intermédiaire(s), pouvant notamment être prévues comme indiqué ultérieurement.

La présente invention, par la sélection et la combinaison dans un ordre donné (avec la première couche positionnée du côté de la zone et/ou des éléments de chauffe, cette première couche se plaçant donc entre 1) ladite zone et/ou le(s)dit(s) élément(s) et 2) la deuxième couche, cette dernière étant plus éloignée - que la première couche - de ladite zone et/ou du ou desdits éléments) de deux couches spécifiques de caractéristiques et natures différentes, permet d'obtenir des performances d'isolation thermique améliorées. L'utilisation du produit isolant, composite et multicouches, selon l'invention permet en outre d'améliorer les performances en matière de consommation énergétique des fours équipés de ce produit par rapport à celles des fours utilisant des isolants habituels, tout en satisfaisant aux impératifs en termes de sécurité, de santé et d'environnement. La deuxième couche formée d'un isolant (de type super-isolant) pourtant traditionnellement non utilisé dans les fours, subit de façon inattendue dans la présente invention très peu de dégradation à l'usage du fait de sa combinaison à la première couche selon l'invention dans l'ordre choisi, les émissions de produits gazeux indésirables étant également limitées, et ce dès la première utilisation du four muni comme isolant(s) de produit(s) selon l'invention (l'isolant selon l'invention étant donc prêt à l'emploi et pouvant être inséré dans les fours sans traitement préalable), le produit ou le four ainsi équipé restant en dessous du seuil d'émission de composants organiques volatils (VOC) escompté dans cette utilisation, en particulier présentant une émission de formaldéhyde (ou formol) inférieure ou égale à 10 mg/kg (c'est à dire inférieure ou égale à 10 mg de formol émis/relargué par kg dudit produit isolant), cette émission étant mesurée selon la norme NF EN 120 (méthode de mesure avec tube chaud à 350°C").

Le produit isolant selon l'invention présente en particulier une résistance thermique équivalente (ou totale) R_{eq} supérieure à 1.2 m².K/W, de préférence supérieure à 1.3 m².K/W, voire supérieure à 2 m².K/W, voire même supérieure à 2.5 m².K/W. La résistance thermique équivalente R_{eq} correspond à la somme des résistances thermiques Rᵢ de chaque couche (i) formant le produit isolant selon l'invention, chaque résistance thermique Rᵢ correspondant au rapport de l'épaisseur de la couche considérée sur sa conductivité thermique λᵢ, la détermination de ces valeurs étant effectuée par mesure à 10°C, selon la norme EN12667.

Le produit isolant thermique selon l'invention présente également une bonne résistance au feu (en particulier une résistance au feu de classe A1 selon la norme EN 13501-1), une bonne tenue mécanique et une bonne durabilité (ou tenue au vieillissement).

Le produit isolant avec sa double constitution selon l'invention intégrant une première couche relativement souple permet également d'épouser les contours des éléments ou parois ou cavités du dispositif, en particulier four, sur ou dans lesquelles les isolants sont positionnés, et permet également de réduire les problèmes de ponts thermiques et d'améliorer les performances d'isolation obtenues. Les cavités dans lesquelles les isolants sont généralement amenés à être insérés dans ces dispositifs sont des espaces creux, en particulier tridimensionnels, autour de l'espace (de chauffe/cuisson) interne (ou caisson ou enceinte interne ou moufle) du dispositif à isoler (ces cavités sur les parties ou faces latérales, supérieure, et inférieure, du moufle d'un four formant par exemple ce qu'on appelle la ceinture, la cavité à l'arrière d'un four (par rapport à l'avant du four muni de l'ouverture permettant d'accéder à l'intérieur du moufle) étant également l'une des cavités à isoler autour du moufle). Par lesdits « espaces tridimensionnels », on entend des espaces ou cavités internes délimités par deux surfaces principales en vis-à-vis l'une de l'autre, dont l'une au moins (mais de préférence les deux) a une forme tridimensionnelle, c'est-à-dire non rigoureusement plane, en particulier peut être une succession de plans jointifs liés par des coudes en angles droits ou courbes. Une forme particulière de surface délimitant une cavité tridimensionnelle peut s'inscrire dans une forme sensiblement cubique.

Le produit isolant selon l'invention est avantageusement positionné, à chaque emplacement ou dans chaque cavité concerné(e) (où l'isolant doit être placé pour isoler la zone de chauffe et/ou le(s) élément(s) précité(s)), de façon que la première couche soit placée du côté de la zone de chauffe et/ou du ou desdits éléments de chauffe, comme précédemment indiqué. La première couche peut être placée le cas échéant au contact direct de la zone de chauffe ou plus particulièrement de la (partie de) paroi ou de l'enveloppe ou du moufle ou du caisson délimitant ladite zone, et sur laquelle ou lequel l'isolant est placé, ou le cas échéant au moins un élément ou une couche intercalaire peut être intercalé(e) entre ladite zone/ lesdits éléments de chauffe et ladite première couche, en particulier une couche pour limiter les échanges radiatifs vers l'isolant, intercalée entre la zone/l'élément à isoler et le produit isolant, cette couche additionnelle pouvant le cas échéant faire partie du produit isolant comme précisé ultérieurement et étant de préférence de faible émissivité (inférieure à 0.4, par exemple une feuille ou couche d'aluminium, comme précisé ultérieurement), l'émissivité étant mesurée au moyen d'un appareil de mesure de référence Spectrum 100 commercialisé par la société Perkin Elmer pour un spectre de longueur d'onde de 5 à 50 µm.

Comme indiqué précédemment, le premier type de couche formant l'isolant utilisé selon l'invention, est une, voire des, couche(s) fibreuse(s) formée(s) de laine(s) et/ou fibre(s) minérale(s), en particulier de type mat(s) (ou matelas ou nappe(s) formé(s) de fibres (en particulier fils et/ou filaments) enchevêtrées). Cette couche peut être formée de façon connue, par exemple par dépôt de fibres, issues d'une filière ou d'un autre dispositif de fibrage (en particulier obtenues par centrifugation puis étirées), sur un tapis, et éventuellement jonction des fibres entre elles par accrochage mécanique, notamment par aiguilletage, ou par liaison chimique au moyen d'un liant appliqué sur les fibres.

La couche fibreuse utilisée peut être formée de différents types de fibres. De préférence, on choisit des couches fibreuses telles qu'une majorité (au moins 50% en poids, en particulier au moins 75% ou au moins 80% en poids des fibres), voire avantageusement l'ensemble, des fibres de chaque couche, sont des fibres inorganiques/minérales, ces fibres pouvant notamment être choisies parmi les fibres de verre (ou la laine de verre), les fibres de roche (ou la laine de roche), les fibres céramiques, les fibres de basalte, etc, et étant de préférence des fibres de verre (par exemple de verre E ou C), ou de roche ou des fibres céramiques.

Ces couches peuvent également présenter le cas échéant un liant (en particulier à base aqueuse, ce liant pouvant le cas échéant comprendre différents composés organiques ou inorganiques (résine(s), additif(s), etc.)), permettant notamment dans une couche fibreuse de lier les fibres entre elles, et/ou des additifs issus de leur fabrication. Le taux de liant dans la couche fibreuse utilisée n'excède préférentiellement pas 8% en poids (de matière sèche ou liant sec) par rapport à la couche, ce liant étant généralement déjà polymérisé ou réticulé ou cuit ou durci ou ayant déjà réagi, et étant de préférence inorganique ou minéral.

Un ou des additifs et/ou charges peuvent également être présents le cas échéant, notamment lorsqu'une ou plusieurs propriétés et/ou fonctions supplémentaires sont recherchées, par exemple un ou des additifs de type huile minérale, silicone, opacifiant(s), etc, le taux de ces additifs étant préférentiellement inférieur à 5% en poids (pour l'ensemble des additifs), notamment inférieur à 1% en poids, de la couche.

La première couche utilisée est avantageusement essentiellement (voire uniquement) minéral(e). Le taux de composants organiques présents (évalué notamment en mesurant la masse du matériau avant et après calcination) est avantageusement inférieur à 0.5%, en particulier inférieur à 0.2% en poids de la couche, la couche étant préférentiellement dénuée de composés organiques.

La première couche présente en outre une masse volumique inférieure à 120 kg/m³, en particulier inférieure à 100 kg/m³, notamment comprise entre 20 et 100 kg/m³, et de préférence inférieure ou égale à 80 kg/m³ , voire inférieure ou égale à 70 kg/m³, et de préférence supérieure ou égale à 30 kg/m³, voire supérieure ou égale à 50 kg/m³, notamment comprise entre 30 et 80 kg/m³ ou entre 50 à 80 kg/m³, notamment allant de 30 à 70 kg/m³ inclus ou de 50 à 70 kg/m³ inclus, l'épaisseur de cette première couche étant en outre de préférence comprise entre 10 et 50 mm, notamment comprise entre 15 et 40 mm (notamment allant de 15 à 35 mm inclus).

A titre d'exemple, on peut utiliser notamment comme première(s) couche(s) des matelas en laine de verre ou en laine de roche commercialisés par les sociétés Saint-Gobain Isover sous la marque Aiguilène 65/35, Aiguilène 70/25, Aiguilène 60/25 ou TNF 18/30.

De préférence, la première couche formant le produit isolant utilisé selon l'invention est à base de laine(s) et/ou fibres minérale(s) fine(s) pour de bonnes performances d'isolation. De façon particulièrement avantageuse selon l'invention, on utilise des couches de (ou en) laine(s) (ou fibres) de verre avec un micronaire inférieur à 25 l/min, notamment compris entre 3 et 18 l/min, ou des couches de laine(s) (ou fibres) de roche avec un fasonaire supérieur à 150 mmce et inférieur à 350 mmce (milimètres colonne d'eau), notamment compris entre 200 et 350 mmce.

La finesse des fibres de verre est souvent déterminée par la valeur de leur micronaire (F) sous 5 g. La mesure du micronaire appelée aussi " indice de finesse " rend compte de la surface spécifique grâce à la mesure de la perte de charge aérodynamique lorsqu'une quantité donnée de fibres est soumise à une pression donnée d'un gaz - en général de l'air ou de l'azote. Cette mesure est usuelle dans les unités de production de fibres minérales, elle est réalisée selon la norme DIN 53941 ou ASTM D 1448 et utilise un appareil dit « appareil micronaire ».

Toutefois un tel appareil présente une limite de mesure quand les fibres utilisées sont fines. Pour des fibres très fines, il est possible et préférable de mesurer la finesse (ou le "micronaire") en l/min grâce à une technique connue et décrite dans la demande de brevet WO2003/098209. Cette demande de brevet concerne un dispositif de détermination de l'indice de finesse de fibres comportant un dispositif de mesurage de l'indice de finesse, ledit dispositif de mesurage étant pourvu d'au moins un premier orifice relié à une cellule de mesure adaptée pour recevoir un échantillon constitué d'une pluralité de fibres (dans le cas présent un échantillon de la couche fibreuse), et d'un second orifice relié à un dispositif de mesurage d'une pression différentielle située de part et d'autre dudit échantillon, ledit dispositif de mesurage de la pression différentielle étant destiné à être relié à un dispositif de production d'écoulement de fluide, le dispositif de mesurage comportant en outre au moins un débitmètre volumétrique du fluide traversant ladite cellule. Ce dispositif donne des correspondances entre des valeurs " micronaire" et des litres par minute (l/min).

Le fasonaire est pour sa part déterminé de la façon suivante : on pèse une éprouvette (5g) constituée par une touffe de laine minérale (dans le cas présent un échantillon de la couche fibreuse) exempte d'huile et de liant mais pouvant comporter des composants non fibreux (slug). Cette éprouvette est comprimée dans un volume donné et est traversé par un courant de gaz (air sec ou azote) maintenu à débit constant. La mesure de fasonaire est alors la perte de charge à travers l'éprouvette, évaluée par une colonne d'eau graduée en unité conventionnelle. Classiquement, un résultat de fasonaire est la moyenne des pertes de charge observées pour dix éprouvettes, la mesure s'exprimant en millimètres de colonne d'eau (mmce).

Comme indiqué dans la définition de l'invention, le deuxième type de couche de l'isolant utilisé selon l'invention est formé d'(au moins) un isolant de type super-isolant, choisi en particulier et avantageusement parmi les isolants à base (au moins en partie) d'aérogel(s) ou de silice amorphe ou parmi les isolants sous vide (VIP), et de façon particulièrement préférée choisi parmi les isolants à base de silice amorphe, en particulier et avantageusement à base de silice pyrogénée, ou choisi parmi les isolants sous vide (VIP). L'épaisseur de cette deuxième couche est de préférence comprise entre 3 et 30 mm (notamment va de 5 à 25 mm, voire de 5 à 15 mm, bornes incluses). De préférence, la deuxième couche utilisée pour former l'isolant selon l'invention présente également une masse volumique comprise entre 100 et 350 kg/m³, notamment entre 100 et 300 kg/m³, et en particulier allant de 150 à 280 kg/m³.

Dans le cas d'un isolant (ou matériau isolant) à base d'aérogels, celui-ci peut intégrer les aérogels sous différentes formes (en particulier sous formes de billes ou particules) ou synthétisés de différentes façons.

Les aérogels sont généralement obtenus à partir d'un gel, fabriqué par exemple par hydrolyse en présence d'un solvant puis gélification avec catalyse à partir d'un précurseur puis par évaporation ou extraction du liquide formant le gel (par exemple en conditions supercritiques ou sub-critiques) afin de remplacer ledit liquide par un gaz (en particulier de l'air) sans effondrement de la structure poreuse. Les aérogels ainsi formés sont des matériaux hautement poreux, à pores ouverts, et dont la taille des pores est nanométrique. Les aérogels se présentent notamment sous forme de granules translucides ou de particules ou granulés ou billes ou poudre, ces aérogels pouvant être utilisés au sein de mats (ou nappes) formés de fibres enchevêtrées.

Les aérogels de la deuxième couche sont avantageusement des aérogels inorganiques, en particulier à base d'oxydes, tels que des aérogels à base de silice, d'aluminium et/ou de titane, et de préférence comprennent au moins un aérogel de silice, en particulier sont essentiellement (pour au moins 50 %, et de préférence pour 100%, en poids des aérogels) ou uniquement des aérogels de silice.

Chaque couche à base d'aérogel(s) (ou renfermant des aérogels ou de l'aérogel, ou formée (au moins en partie) d'aérogel(s)) utilisée le cas échéant selon l'invention présente de préférence un taux d'aérogel(s) compris entre 25 et 95%, et de préférence compris entre 40 et 85% en poids de ladite couche, et peut présenter le cas échéant de 5 à 75 % (en particulier de 20 à 40 %) en poids de fibres. En effet, la couche à base d'aérogel(s) se présente en particulier sous forme d'une couche fibreuse (ou formée de fibres), en particulier de type mat (ou matelas ou nappe formé(e) de fibres enchevêtrées), formant une structure poreuse ou « discontinue », renfermant des aérogels. Chaque couche fibreuse peut être formée de façon connue comme vue précédemment pour le premier type de couche. Les aérogels peuvent être intégrés aux fibres de différentes façons, soit par mélange avec des aérogels préformés (fabriqués indépendamment des couches fibreuses), soit par imprégnation des couches fibreuses par ou dans une solution permettant de former les aérogels in situ, par exemple en imprégnant les couches par (une solution contenant) les réactifs permettant d'obtenir les aérogels, l'extraction du liquide et la gélification étant opérés (en particulier en conditions supercritiques) afin d'obtenir des couches isolantes renfermant des aérogels. Des exemples de couches, ou mats, d'aérogels (renforcés par des fibres), en particulier réalisés par imprégnation, sont notamment des mats d'aérogels commercialisés sous la référence Spaceloft® ou Pyrogel XT-E par la société Aspen Aerogel Inc.

Comme vu précédemment pour la première couche, chaque couche fibreuse renfermant des aérogels peut être formée de différents types de fibres, la majorité (au moins 50% en poids, en particulier au moins 75% ou au moins 80% en poids des fibres), voire avantageusement l'ensemble, des fibres de chaque couche étant de préférence des fibres inorganiques/minérales, ces fibres pouvant notamment être choisies parmi les fibres de verre (ou la laine de verre), les fibres de roche (ou la laine de roche), les fibres céramiques, les fibres de basalte, etc, et étant de préférence des fibres de verre (par exemple de verre E ou C), ou de roche.

Ce type d'isolant présente avantageusement une conductivité thermique inférieure à 22 mW/m.K à la température de 10°C, notamment inférieure à 20 mW/m.K, et son épaisseur est généralement de 5 mm à 10 mm inclus. Le cas échéant deux de ces isolants peuvent être assemblés (par exemple superposés et collés ensemble) pour former la deuxième couche.

Le ou les isolants formés (ou à base) de silice(s) amorphe(s) (notamment de silice pyrogénée (ou pyrogénique) ou de silice précipitée) pouvant être utilisés pour former la deuxième couche de l'isolant selon l'invention sont généralement constitués de poudre de silice amorphe au sein d'une couche fibreuse (la poudre étant par exemple enveloppée ou encapsulée par ou dans ladite couche), ladite couche fibreuse se présentant par exemple sous forme de tissu(s) de fibres (en particulier de fibres de verre E), par exemple sous forme de deux tissus cousus de façon à former des cellules destinées à contenir de la poudre de silice. La poudre de silice peut ainsi être enfermée dans des cellules de tissu(s) délimitées par des coutures. Chaque couche à base de silice amorphe (ou renfermant de la silice amorphe) utilisée le cas échéant selon l'invention présente de préférence un taux de silice amorphe compris entre 50 et 90%, et de préférence compris entre 60 et 80% en poids de ladite couche, et peut présenter le cas échéant de 10 à 50% (en particulier de 20 à 40%) en poids de fibres (par rapport à la couche formée des fibres et de la silice). Le cas échéant, un additif, tel qu'un agent opacifiant, peut être mélangé à la poudre de silice afin de limiter les transferts radiatifs.

Ce type d'isolant présente avantageusement une conductivité thermique inférieure à 20 mW/m.K à la température de 10°C, notamment inférieure à 18 mW/m.K, et son épaisseur est généralement de 5 mm à 15 mm inclus. Le cas échéant deux de ces isolants peuvent être assemblés (par exemple superposés et collés ensemble) pour former la deuxième couche.

Des exemples d'isolants (ou couches d'isolants) à base de silice amorphe (en particulier de silice pyrogénée) sont notamment des isolants commercialisés sous la référence Siltherm M-5200 par la société Siltherm ou sous la référence Microtherm Quilted 1000R ou la référence Slimflex par la société Promat.

Le ou les isolants sous vide pouvant être utilisés pour former la deuxième couche de l'isolant selon l'invention sont généralement formés d'un ou plusieurs coeurs (ou noyaux ou cellules) renfermant généralement un matériau poreux capable de résister à la pression extérieure, ces coeurs étant entourés et délimités par une enveloppe suffisamment étanche pour maintenir le vide (pression généralement inférieure à 0.5 mbar) effectué au sein du ou des coeurs. Le matériau au sein du ou des coeurs peut être un matériau fibreux, par exemple à base de fibres de verre ou de roche ou de fibres céramiques et/ou un matériau en poudre tel que de la poudre de silice (par exemple pyrogénée ou précipitée), ce matériau étant le cas échéant mis en forme et conservant sa forme une fois sous vide. L'enveloppe délimitant le ou les coeurs (et permettant leur maintien sous vide) peut être formée d'une ou plusieurs couches, par exemple peut être formée d'un ou plusieurs films plastiques ou polymères, pouvant être le cas échéant métallisés, ou métalliques, et/ou peut être formée d'une ou plusieurs couches fibreuses. Une ou des feuilles d'aluminium, ou de polyéthylène téréphtalate, ou de polyéthylène, ou de polypropylène, ou d'acier, etc. peuvent notamment former ladite enveloppe, l'épaisseur de chaque couche ou feuille ne dépassant généralement pas 100 µm. L'enveloppe peut le cas échéant être formée de couches et/ou feuilles différentes selon le coté de l'enveloppe considéré.

La masse volumique de ce type d'isolant est généralement comprise entre 100 kg/m³ et 300 kg/m³ (après mise sous vide), et est de préférence comprise entre 150 kg/m³ et 250 kg/m³. La porosité du matériau utilisé au sein de chaque noyau est préférentiellement supérieure à 75% (en volume) et notamment supérieure à 90%. Le cas échéant, un ou des additifs tels qu'un opacifiant peuvent être ajoutés à ce(s) matériau(x), afin par exemple de limiter les transferts radiatifs dans le(s) matériau(x).

Lorsque l'isolant sous vide comprend plusieurs noyaux séparés, ces noyaux peuvent être au sein d'une même enveloppe scellée entre chaque noyau, le pliage et/ou le découpage éventuels de ces isolants pouvant se faire au niveau des zones de scellage, en dehors des zones occupées par les noyaux. L'isolant sous vide se présente en particulier sous la forme d'un panneau rigide ou d'un ensemble de panneaux rigides, le cas échéant liés entre eux par une même enveloppe ou pouvant être liés entre eux, dans l'isolant ou le dispositif muni de l'isolant selon l'invention, par la première couche (l'isolant sous vide peut ainsi être assemblé à la première couche sous forme de plusieurs panneaux initialement séparés, par exemple en associant un panneau sous vide par face d'un caisson de chauffe à isoler, sur une première couche qui elle peut être continue d'une face à l'autre).

Ce type d'isolant (isolant sous vide) présente avantageusement une conductivité thermique inférieure à 10 mW/(m.K) à la température de 10°C, notamment inférieure à 6 mW/(m.K), et préférentiellement inférieure à 4 mW/(m.K), et son épaisseur est généralement comprise entre 5 mm et 25 mm, notamment est de 5 mm à 15 mm. Le vide peut être opéré dans les noyaux pendant ou après la réalisation de ces isolants. Le cas échéant deux de ces isolants peuvent être assemblés (par exemple superposés et collés ensemble) pour former la deuxième couche.

Des exemples d'isolants sous vide sont notamment des isolants commercialisés sous la référence U-Vacua par la société Panasonic.

Les différents types de couches (comprenant, au moins ou uniquement, la première et la deuxième couche précitées) selon l'invention sont combinées, au plus tard in situ lors de l'installation du ou des isolants dans le dispositif à isoler, pour former le produit isolant selon l'invention, ces couches pouvant être simplement superposées et/ou maintenues entre elles et/ou autour de la ou des zones ou éléments à isoler par cerclage et/ou encastrement, ou pouvant être avantageusement liées entre elles par collage (à l'aide de colles ou liants inorganique, par exemple de colles de type silicate) ou par couture, etc, une ou des autres couches pouvant également être ajoutées, en particulier intercalées entre les deux types de couches précités, et/ou en surface de l'une et/ou l'autre des couches précitées (par exemple en surface de la première couche comme vu précédemment), afin éventuellement d'améliorer encore les performances d'isolation thermique ou d'autres performances.

Notamment le produit selon l'invention peut le cas échéant comprendre une troisième couche, ou plusieurs autres couches, en particulier une couche intercalaire entre la première couche et la deuxième couche et/ou entre la zone /le(s) élément(s) (de chauffe) à isoler et la première couche et/ou du côté de la deuxième couche le plus éloigné de la zone et/ou de(s) élément(s) à isoler, par exemple et avantageusement une couche de faible émissivité, en particulier d'émissivité inférieure à 0.4 pour des longueurs d'onde de 5 à 50 µm (l'émissivité étant mesurée au moyen d'un appareil de mesure de référence Spectrum 100 commercialisé par la société Perkin Elmer), telle qu'une couche ou feuille d'aluminium (ou en aluminium). L'épaisseur de cette couche supplémentaire ou de chacune de ces couches, dans le cas notamment de couche(s) d'aluminium, peut être notamment de l'ordre de 10 à 45 µm (bornes incluses). Le cas échéant et avantageusement, le produit selon l'invention peut comprendre trois ou au moins trois de ces couches supplémentaires, en particulier trois couches d'aluminium, l'assemblage se présentant en particulier au moins comme suit : aluminium / première couche / aluminium / deuxième couche / aluminium, chaque feuille ou couche d'aluminium précitée pouvant aussi alternativement être optionnelle (l'assemblage ne comportant alors plus qu'une ou deux de ces feuilles ou couches d'aluminium par exemple).

Le produit selon l'invention ou l'une de ses couches peut aussi comporter un surfaçage (pouvant être aussi une couche d'aluminium telle que précitée) ou revêtement, par exemple peut être revêtu de ou comporter un voile de verre, un adhésif, un enduit, etc, le cas échéant appliqué en surface, sur une face ou la totalité du produit ou de la couche notamment pour limiter la poussière, protéger le produit, le renforcer, permettre sa manipulation, etc ; par exemple, dans le cas notamment d'une première couche sous forme d'une nappe aiguilletée de laine de roche, celle-ci peut être revêtue d'une feuille d'aluminium pour aider à sa manipulation, et dans le cas d'un panneau sous vide, celui-ci peut être entièrement revêtu d'aluminium, etc.

Comme vu précédemment pour la première couche, chaque autre couche de l'isolant selon l'invention (telle que la deuxième couche) peut présenter le cas échéant un liant et/ou des additifs et/ou charges issus de sa fabrication, le(s) liant(s) présent(s) le cas échéant étant de préférence inorganiques (ou minéral/minéraux), et le taux d'additifs étant préférentiellement inférieur à 1% en poids (pour l'ensemble des additifs), notamment inférieur à 0.5% en poids, de ladite couche.

Comme vu précédemment pour la première couche, chaque autre couche de l'isolant selon l'invention (en particulier la deuxième couche), de même que l'isolant ainsi formé selon l'invention, est avantageusement essentiellement (voire uniquement) minéral(e). Le taux de composants organiques présents dans le produit isolant selon l'invention est avantageusement inférieur à 20% en poids, en particulier inférieur à 10% en poids, et préférentiellement inférieur à 5% en poids dudit produit.

Le cas échéant, le produit isolant peut associer au moins une couche continue et au moins une couche discontinue, en particulier au moins une première couche continue et une deuxième couche (pouvant être formée d'isolants plus rigides tels que les isolants sous vide) discontinue, notamment formée de panneaux discontinus (par exemple, pour isoler la ceinture d'un four, se présentant sous forme de quatre panneaux, chaque panneau devant coïncider avec une face du moufle ou de l'enceinte de chauffe à isoler) répartis de façon appropriée sur la première couche, et pouvant être maintenus entre eux le cas échéant par ladite première couche ou par d'autres moyens dans le dispositif à isoler tels que le cerclage, ou encore le collage (les panneaux discontinus étant par exemple collés chacun sur une face intérieure du carter formant l'enveloppe externe du four, la première couche enroulée autour du caisson/de la zone de chauffe étant alors combinée à la seconde couche lors du montage et de la fermeture du carter).

Le produit selon l'invention présente préférentiellement une densité (ou masse volumique) comprise notamment entre 60 et 300 kg/m³, de préférence entre 100 et 250 kg/m³, notamment entre 150 et 250 kg/m³

Le produit isolant selon l'invention se présente généralement sous forme (semi-) rigide (en particulier sous forme d'une nappe multicouches formée d'au moins les deux couches précitées, par exemple cousues ou collées entre elles ou juste juxtaposées lors de l'isolation du four, les deux couches pouvant avoir été découpées et conditionnées séparément), et est formé et/ou découpé le cas échéant aux dimensions requises avant d'être inséré/positionné dans le ou les endroits à isoler pour obtenir le dispositif selon l'invention. Il peut en particulier être fixé sur ou autour des éléments ou parois ou dans les cavités à isoler par différents moyens. Il convient en particulier à l'isolation du caisson de chauffe ou moufle des fours (que ce soit au niveau de la porte, de la face arrière ou des faces latérales, inférieure et supérieure) et/ou à l'isolation des éléments de chauffe et la protection des autres éléments du four (tels que des lampes).

Les performances thermiques de l'isolant selon l'invention se traduisent par des valeurs de résistance thermique équivalente avantageusement supérieures à 1.2 m²K/W comme vu précédemment. Le produit selon l'invention présente également une émission de formaldéhyde (ou formol) inférieure ou égale à 10 mg/kg, comme vu précédemment, la mesure du taux de formol émis étant faite notamment selon la norme NF EN 120, en particulier en plaçant 10 g d'échantillon dans un four tubulaire à 350°C, un courant gazeux d'air reconstitué traversant l'échantillon pendant 1h, le formol dégagé étant piégé dans deux barboteurs en série remplis de 50 ml d'eau, et sa quantité cumulée dans les deux barboteurs étant mesurée par la méthode Lange, en effectuant la mesure sur un four tubulaire Hermann Moritz.

Le dispositif selon l'invention est de préférence un four, voire une partie de four, telle qu'une enceinte de cuisson, notamment à usage domestique ou éventuellement autre (par exemple à usage industriel), au sein duquel les températures peuvent atteindre occasionnellement 450°C par exemple, voire 550°C voire éventuellement plus, ce dispositif comprenant ou étant revêtu d'au moins un produit isolant tel que précédemment défini. Le four comprend généralement au moins un moufle ou caisson ou enceinte de chauffe délimitant la zone de chauffe, ce moufle étant généralement en matériau métallique ou réfractaire, le produit isolant étant usuellement positionné autour de ce moufle. Avantageusement, le dispositif selon l'invention ne comprend comme produit(s) isolant(s) que l'un ou plusieurs des produits isolants selon l'invention précités.

La présente invention et ses avantages seront mieux compris à la lecture des exemples qui suivent, uniquement donnés à titre illustratif et qui ne peuvent en aucun cas être considérés comme limitatifs.

### Exemple de référence 1

Dans cet exemple, on a déterminé la conductivité thermique d'une couche sous la forme d'un mat de laine de verre C aiguilleté commercialisé sous la référence Aguilène 70/35 par la société Saint-Gobain Isover France, de 35 mm d'épaisseur et de masse volumique de l'ordre de 70 kg/m³ (mesures de conductivité thermique λ (nécessaire au calcul de la résistance thermique) effectuées à 10°C selon la norme EN12667).

La résistance thermique R (correspondant au rapport de l'épaisseur de l'isolant sur la conductivité thermique λ) obtenue était de 1.1 m².K /W.

Un four, de référence De Dietrich DOP1180BU commercialisé par la société Brandt, a ensuite été équipé d'une ceinture intérieure isolante en utilisant pour former cette ceinture le mat en laine de verre précédent, et la consommation du four a été mesurée selon la norme CEI 60350. La mesure de la consommation énergétique du four a été faite en mode chaleur conventionnelle, avec un échauffement de 180°C (par rapport à une température ambiante initiale de 23°C) correspondant à une température au centre du four de 203°C. La consommation du four a été de 760 Wh dans cet exemple de référence.

### Exemple de référence 2

Dans cet exemple, on a combiné (en les superposant, l'ensemble étant maintenu par cerclage, lors de son positionnement dans le four, à l'aide de tiges métalliques) une couche de laine de verre de même densité et structure que dans l'exemple de référence 1 précédent mais présentant cette fois une épaisseur de 25 mm, avec une couche de super-isolant de 10 mm d'épaisseur, sous la forme de deux tissus de fibres de verre E liés par des coutures en damier ménageant des cellules renfermant chacune de la poudre de silice pyrogénée, ce super isolant à base de silice pyrogénée présentant une masse volumique de l'ordre de 200 kg/m³ et étant commercialisé sous la référence Siltherm M-5200 par la société Siltherm.

On a déterminé la résistance thermique équivalente (somme des résistances thermiques de chaque couche formant le produit isolant, chaque résistance thermique correspondant au rapport de l'épaisseur de la couche considérée sur sa conductivité thermique, la détermination de ces valeurs étant effectuée par mesure à 10°C selon la norme EN12667) de l'isolant multicouches ainsi formé. La résistance thermique équivalente R_{eq} obtenue était de 1.4 m².K /W

Le four, de référence De Dietrich DOP1180BU, mentionné dans l'exemple précédent a cette fois été équipé d'une ceinture intérieure isolante (positionnée autour des parois délimitant le caisson de chauffe, ou moufle, du four, dans les cavités présentes entre ces parois et le carter extérieur du four) en utilisant cette fois l'isolant multicouches du présent exemple de référence 2 en plaçant la couche de super-isolant le plus près de la zone de chauffe, et la consommation du four a été mesurée, comme dans l'exemple précédent en mode chaleur conventionnelle, avec un échauffement de 180°C (par rapport à une température ambiante initiale de 23°C). La consommation du four a été de 780 Wh dans cet exemple de référence, soit une consommation plus importante qu'en utilisant le mat de laine minérale seul. De façon surprenante, même si la résistance thermique équivalente obtenue pour l'isolant multicouches selon le présent exemple de référence 2 était ainsi supérieure à celle de l'isolant monocouche utilisé dans l'exemple de référence 1, impliquant normalement une meilleure isolation devant conduire à l'obtention de meilleurs performances, l'utilisation de l'isolant multicouches dans la configuration telle que décrite dans le présent exemple de référence 2 a donc conduit à une dégradation des performances énergétiques du four.

### Exemple 1 selon l'invention

On a procédé comme dans l'exemple de référence 2 en inversant la position de la couche de super-isolant et celle de la couche de laine minérale de façon que la première couche la plus proche de la zone de chauffe soit la couche de laine minérale, et la deuxième, plus éloignée (par rapport à la première couche), soit la couche de super-isolant. La résistance thermique équivalente R_{eq} de l'isolant était, comme précédemment, de 1.4 m².K /W.

Le four mentionné dans les exemples précédents a donc été équipé cette fois d'une ceinture intérieure isolante en utilisant l'isolant multicouches du présent exemple 1 selon l'invention correctement positionné comme indiqué dans le présent exemple, et la consommation du four a été mesurée, comme dans les exemples précédents en mode chaleur conventionnelle avec un échauffement de 180°C (par rapport à une température ambiante initiale de 23°C). La consommation du four a été de 680 Wh dans cet exemple selon l'invention.

Ainsi, contrairement à l'exemple de référence 2, et alors que l'isolant selon le présent exemple selon l'invention présente une résistance thermique équivalente R_{eq} identique à celle dudit exemple de référence 2, on observe cette fois une réduction significative de la consommation énergétique du four.

L'isolant du présent exemple selon l'invention, avec sa combinaison de couches aux caractéristiques différentes correctement positionnées, permet donc une amélioration significative de l'isolation thermique du four, ainsi qu'une réduction importante de la consommation énergétique du four.

### Exemple 2 selon l'invention

Dans l'isolant du précédent exemple 1 selon l'invention on a intercalé une couche sous forme d'une feuille d'aluminium de 20 µm d'épaisseur entre la première et la seconde couches précitées et on a à nouveau mesuré la consommation du four (en opérant selon le même mode opératoire que dans les exemples précédents avec un échauffement au centre du four de 180°C) en remplaçant l'isolant de l'exemple 1 selon l'invention par le nouvel isolant ainsi formé (comprenant une couche intermédiaire supplémentaire), le positionnement de la première et deuxième couche restant le même que dans l'exemple précédent selon l'invention (couche de laine minérale le plus près de la zone de chauffe et couche de super-isolant la plus éloignée de la zone de chauffe), la résistance thermique équivalente R_{eq} de l'isolant étant, encore une fois, de 1.4 m².K /W. La consommation du four a été de 670 Wh dans cet exemple selon l'invention, soit une amélioration supplémentaire de la consommation énergétique du four.

### Exemple 3 selon l'invention.

Dans l'isolant du précédent exemple 2 selon l'invention on a déplacé la couche d'aluminium de façon à ce qu'elle se positionne entre la première couche et le moufle du four et non plus entre la première et la deuxième couche de l'isolant. On a à nouveau mesuré la consommation du four (en opérant selon le même mode opératoire que dans les exemples précédents avec un échauffement au centre du four de 180°C) en remplaçant l'isolant de l'exemple 2 selon l'invention par le nouvel isolant ainsi formé, le positionnement de la première et deuxième couche l'une par rapport à l'autre restant le même que dans l'exemple 2 selon l'invention (couche de laine minérale le plus près de la zone de chauffe et couche de super-isolant la plus éloignée de la zone de chauffe), la résistance thermique équivalente R_{eq} de l'isolant étant, encore une fois, de 1.4 m².K /W. La consommation du four a été de 660 Wh dans cet exemple selon l'invention, soit une amélioration supplémentaire de la consommation énergétique du four.

### Exemple 4 selon l'invention.

Dans l'isolant du précédent exemple 2 selon l'invention on a remplacé la deuxième couche par un ensemble de panneaux sous vide (chaque panneau devant coïncider avec une face du moufle du four à isoler) répartis de façon appropriée sur la première couche (pour l'isolation de la ceinture, l'isolant combine donc la première couche continue en laine de verre vue précédemment, une couche intermédiaire continue en aluminium, et une deuxième couche sous forme de quatre panneaux sous vide répartis sur la première couche de façon que chaque panneau coïncide avec une face du moufle, l'ensemble étant dans cet exemple maintenu par cerclage). Les panneaux sous vide choisis étaient des panneaux de 10 mm d'épaisseur commercialisés sous la référence U-Vacua par la société Panasonic. La résistance thermique équivalente R_{eq} de l'isolant était cette fois de 2.3 m².K/W.

On a à nouveau mesuré la consommation du four (en opérant selon le même mode opératoire que dans les exemples précédents avec un échauffement au centre du four de 180°C) en remplaçant l'isolant de l'exemple 2 selon l'invention par le nouvel isolant ainsi formé, le positionnement de la première et deuxième couche restant le même que dans l'exemple précédent selon l'invention (couche de laine minérale le plus près de la zone de chauffe et couche de super-isolant la plus éloignée de la zone de chauffe). La consommation du four a été de 650 Wh dans cet exemple selon l'invention, soit une amélioration supplémentaire par rapport au précédent exemple 2 où la deuxième couche était cette fois à base de silice pyrogénée.

### Exemple 5 selon l'invention.

Dans l'isolant du précédent exemple 4 selon l'invention on a déplacé la couche d'aluminium de façon à ce qu'elle se positionne entre la première couche et le moufle du four et non plus entre la première et la deuxième couche de l'isolant. On a à nouveau mesuré la consommation du four (en opérant selon le même mode opératoire que dans les exemples précédents avec un échauffement au centre du four de 180°C) en remplaçant l'isolant de l'exemple 4 selon l'invention par le nouvel isolant ainsi formé, le positionnement de la première et deuxième couche l'une par rapport à l'autre restant le même que dans l'exemple 4 selon l'invention (couche de laine minérale le plus près de la zone de chauffe et couche de super-isolant la plus éloignée de la zone de chauffe), la résistance thermique équivalente R_{eq} de l'isolant étant, encore une fois, de 2.3 m².K /W. La consommation du four a été de 635 Wh dans cet exemple selon l'invention, soit une amélioration supplémentaire de la consommation énergétique du four.

Les résultats obtenus montrent que l'utilisation des produits isolants selon l'invention pour l'isolation de fours domestiques ou pour d'autres utilisations à haute température permet d'obtenir, pour les fours que ces produits équipent, des performances énergétiques améliorées, ledit isolant présentant des performances isolantes particulièrement satisfaisantes.

Le produit isolant utilisé selon l'invention est notamment adapté à l'isolation de parois ou de composants de fours électroménagers mais peut également être utilisé avec avantage pour l'isolation thermique de toute autre surface, en particulier pour des applications (ou pour l'isolation de produits soumis à) haute température.

## Revendications

1. Dispositif, fonctionnant à haute température, en particulier jusqu'à 550°C, et notamment entre 50 et 350°C, tel qu'un four ou une partie de four, ce dispositif comprenant au moins un produit isolant formé d'au moins deux couches, une première couche, placée vers la zone de chauffe et/ou le(s) élément(s) de chauffe à isoler, formée de laine(s) et/ou fibre(s) minérale(s) et de densité inférieure à 120 kg/m³, et une deuxième couche, plus éloignée, choisie parmi les isolants formés d'aérogel(s) ou de silice amorphe ou les isolants sous vide ou éventuellement tout autre super isolant.

2. Dispositif selon la revendication 1, **caractérisé en ce que** ledit produit isolant est positionné de façon que la première couche soit placée au contact direct de ladite zone de chauffe, ou plus particulièrement de la paroi ou de l'enveloppe ou du moufle délimitant ladite zone, ou **en ce qu'**au moins un élément ou une couche intercalaire est intercalé(e) entre ladite zone ou lesdits éléments de chauffe et ladite première couche.

3. Dispositif selon l'une des revendications 1 à 2, **caractérisé en ce que** ladite première couche présente une masse volumique inférieure à 100 kg/m³, notamment comprise entre 20 et 100 kg/m³, et de préférence supérieure ou égale à 30 kg/m³ et inférieure ou égale à 80 kg/m³, l'épaisseur de cette première couche étant en outre de préférence comprise entre 10 et 50 mm, notamment comprise entre 15 et 40 mm.

4. Dispositif selon l'une des revendications 1 à 3, caractérisé en ce ladite deuxième couche présente une masse volumique comprise entre 100 et 350 kg/m³, notamment entre 100 et 300 kg/m³ et en particulier allant de 150 à 280 kg/m³, l'épaisseur de cette deuxième couche étant en outre de préférence comprise entre 3 et 30 mm, notamment comprise entre 5 et 25 mm.

5. Dispositif selon l'une des revendications 1 à 4, **caractérisé en ce que** ledit produit isolant comprend au moins une troisième couche, en particulier intercalaire entre la première couche et la deuxième couche et/ou entre la zone ou le(s) élément(s) à isoler et la première couche et/ou du côté de la deuxième couche le plus éloigné de la zone et/ou de(s) élément(s) à isoler, en particulier une couche d'émissivité inférieure à 0.4 pour des longueurs d'onde de 5 à 50 µm, telle qu'une couche d'aluminium.

6. Produit isolant, adapté à l'isolation thermique de dispositifs haute température, en particulier de dispositifs selon l'une des revendications 1 à 5, ledit produit étant formé d'au moins deux couches, une première couche, destinée à être placée vers la zone de chauffe et/ou le(s) élément(s) de chauffe à isoler, formée de laine(s) et/ou fibre(s) minérale(s) et de densité inférieure à 120 kg/m³, et une deuxième couche, plus éloignée, choisie parmi les isolants formés d'aérogel(s) ou de silice amorphe ou les isolants sous vide ou éventuellement tout autre super isolant.

7. Produit isolant selon la revendication 6, **caractérisé en ce qu'**il présente une résistance thermique équivalente R_{eq} supérieure à 1.2 m².K/W, de préférence supérieure à 1.3 m².K/W, voire supérieure à 2 m².K/W, voire même supérieure à 2.5 m².K/W.

8. Produit isolant selon l'une des revendications 6 ou 7, **caractérisé en ce que** le taux de composants organiques présents dans ledit produit est inférieur à 20% en poids, en particulier inférieur à 10% en poids, et préférentiellement inférieur à 5% en poids dudit produit.

9. Utilisation d'un produit isolant selon l'une des revendications 6 à 8 pour l'isolation à haute température, en particulier d'un dispositif soumis à des températures jusqu'à 550°C, et notamment entre 50 et 350°C.
